# EUROPEAN PATENT APPLICATION

(11) **EP 4 778 748 A1**
(43) Date of publication of application: **22.07.2026**
(21) Application number: 26152818.6
(22) Date of filing: 20.01.2026
(51) Int. Cl.: B60H 1/34

(54) **AIR VENT, VEHICLE AND AIR BLOWING METHOD**

(30) Priority: 20.01.2025 CN 202510089562
(71) Applicant: Faurecia Automotive Interior System (Shanghai) Co., Ltd., Shanghai 201109 (CN)
(72) Inventor: SUN, Weifeng, Shanghai (CN); REN, Zheng, Shanghai (CN)
(74) Representative: Pfenning, Meinig & Partner mbB

(57) **Abstract**

The present disclosure provides an air vent, a vehicle, and an air blowing method. The air vent includes: a crank capable of outputting rotation; a first transmission rod capable of being driven by the rotation output by the crank and driving a first blowing direction air guiding member of the air vent; a second transmission rod capable of being driven by the rotation output by the crank and driving a second blowing direction air guiding member of the air vent, wherein the blowing directions of the first blowing direction air guiding member and the second blowing direction air guiding member are arranged non - parallelly; a first elastic member group capable of contacting the first transmission rod, and the first elastic member group defining two ends of a rotation range of the first transmission rod; a second elastic member group capable of contacting the second transmission rod, and the second elastic member group defining two ends of a rotation range of the second transmission rod

## Description

### Field

The present disclosure relates to an air vent, a vehicle, and an air blowing method.

### Background

Air vents, such as vehicle air vents, are generally driven by motors and are thus also referred to as electric air vents. Electric air vents are upgraded products based on traditional manually-operated air vents, which enable intelligent adjustment of temperature and humidity inside vehicle cabins. For example, Electric air vents are able to automatically detect the temperature and humidity in the cabin and perform diversified adjustments after receiving instructions from intelligent chip sensors, mobile phone apps, cabin screens, touch control, gesture control, or voice recognition. Therefore, electric air vents provide users with a better user experience.

Air vents generally use horizontal blades as a first blowing direction air guiding member and vertical blades as a second blowing direction air guiding member. That is, the first blowing direction is horizontal (also known as the left-right direction) and the second blowing direction is vertical (also known as the up-down direction), so as to realize left-right and up-down air guiding respectively, thereby adjusting the up-down and left-right directions of air output.

In the prior art, the control of the blowing direction is generally achieved by multiple motors, that is, at least one motor controls the horizontal blades for the first blowing direction, and at least one motor controls the vertical blades for the second blowing direction. However, the multi-motor solution with at least two motors is not conducive to lightweight design and compact structure, and leads to high costs.

Therefore, there is a need in the art for an air vent, a vehicle, and an air blowing method that have a simple and compact structure, low cost, and are conducive to lightweight design.

### Summary

One purpose of the present disclosure is to provide an air vent.

Another purpose of the present disclosure is to provide a vehicle.

Yet another purpose of the present disclosure is to provide an air blowing method.

According to the first aspect of the present disclosure, an air vent includes: a crank capable of outputting rotation; a first transmission rod capable of being driven by the rotation output by the crank and driving a first blowing direction air guiding member of the air vent; a second transmission rod capable of being driven by the rotation output by the crank and driving a second blowing direction air guiding member of the air vent, wherein the blowing directions of the first blowing direction air guiding member and the second blowing direction air guiding member are arranged non - parallelly; a first elastic member group capable of contacting the first transmission rod, and the first elastic member group defining two ends of a rotation range of the first transmission rod; a second elastic member group capable of contacting the second transmission rod, and the second elastic member group defining two ends of a rotation range of the second transmission rod, and in a full-cycle rotation trajectory output by the crank, the full-cycle rotation trajectory of the crank interferes with the first transmission rod and the second transmission rod; and the crank drives at most one of the first transmission rod and the second transmission rod to rotate.

In one or more embodiments of the air vent, the air vent includes a shell, the shell defines a flow space and an outlet of the air vent, the crank, the first transmission rod and the second transmission rod are located outside the shell; and the first blowing direction air guiding member and the second blowing direction air guiding member are located inside the flow space.

In one or more embodiments of the air vent, the first elastic member group and the second elastic member group are torsion springs.

In one or more embodiments of the air vent, the crank drives one of the first transmission rod and the second transmission rod, and the crank is non - contacting with the other one.

In one or more embodiments of the air vent, the first transmission rod and the second transmission rod rotatably drive the first blowing direction air guiding member and the second blowing direction air guiding member respectively.

In one or more embodiments of the air vent, the first transmission rod rotates around a first axis, the second transmission rod rotates around a second axis, and the first axis and the second axis are parallel to each other.

In one or more embodiments of the air vent, the blowing directions of the first blowing direction air guiding member and the second blowing direction air guiding member are perpendicular to each other.

In one or more embodiments of the air vent, the crank drives one of the first transmission rod and the second transmission rod to rotate by directly abutting against it.

According to the second aspect of the present disclosure, a vehicle includes at least one air vent according to the first aspect.

According to the third aspect of the present disclosure, an air blowing method employs the air vent according to the first aspect. The air vent is able to be switched between a first state and a second state. In the first state, the first blowing direction air guiding member of the air vent provides a first blowing angle, and the second blowing direction air guiding member is at a second blowing angle; in the second state, the first blowing direction air guiding member of the air vent is at a third blowing angle, and the second blowing direction air guiding member is at a fourth blowing angle, the first blowing angle is different from the third blowing angle, and the second blowing angle is different from the fourth blowing angle.

The air blowing method includes the following steps to realize switching from the first state to the second state:
The crank rotates along a first direction, and the crank drives the first transmission rod at a first position on one side of the first transmission rod to an end of the rotation range of the first transmission rod, and then disengages from the first transmission rod, the first position corresponding to the first blowing angle;
The crank rotates along a second direction opposite to the first direction, and the crank drives the first transmission rod at the end of the rotation range on the other side of the first transmission rod to rotate to a third position, the third position corresponding to the third blowing angle;
The crank rotates along the first direction again, the crank disengages from the first transmission rod and drives the second transmission rod at a second position to rotate to a fourth position, the second position corresponding to the second blowing angle, and the fourth position corresponding to the fourth blowing angle;
   or
The crank rotates along the second direction, and the crank drives the second transmission rod at the second position on one side of the second transmission rod to an end of the rotation range of the second transmission rod, and then disengages from the second transmission rod, the second position corresponding to the second blowing angle;
The crank rotates along the first direction opposite to the second direction, and the crank drives the second transmission rod at the end of the rotation range on the other side of the second transmission rod to rotate to the fourth position, the fourth position corresponding to the fourth blowing angle;
The crank rotates along the second direction again, the crank disengages from the second transmission rod and drives the first transmission rod at the first position to rotate to the third position, the first position corresponding to the first blowing angle, and the third position corresponding to the third blowing angle.

The beneficial effects of the present disclosure include but are not limited to:
Through the structure of the first transmission rod, the second transmission rod, the first elastic member group and the second elastic member group, as well as the arrangement of the rotation path, the full-cycle rotation trajectory of the crank interferes with the first transmission rod and the second transmission rod; and the crank drives at most one of the first transmission rod and the second transmission rod to rotate. This not only realizes that one single motor is able to control the angles of the first blowing direction and the second blowing direction, but also the first blowing direction air guiding member and the second blowing direction air guiding member are independently controlled without linkage control between them, making the structure of the air vent simple and easy to control.

### Description of attached drawings

The above and other features, properties, and advantages of the present disclosure will become more apparent through the following description in conjunction with the accompanying drawings and embodiments, where:
FIG. 1 is a schematic structural diagram of a vehicle according to an embodiment;
FIG. 2 is a schematic structural diagram of an air vent according to an embodiment;
FIGS. 3A to 3E are schematic diagrams of each step of adjusting the blowing angle of the air vent according to an embodiment;
FIGS. 4A to 4F are schematic diagrams of each step of adjusting the blowing angle of the air vent according to an embodiment;
FIGS. 5A and 5B are flowcharts of an air blowing method according to some embodiments respectively.

### Reference Numerals:

1000 - vehicle;
10 - air vent;
101 - flow space;
102 - outlet;
1 - crank;
21 - first transmission rod;
210 - an end of rotation range;
211 - first position;
212 - third position;
2100 - first axis;
22 - second transmission rod;
221 - second position;
222 - fourth position;
2200 - second axis;
31 - first elastic member group;
32 - second elastic member group;
4 - shell.

### Detailed Description of Embodiments

Hereinafter, embodiments of the technical solution of the present disclosure will be described in detail with reference to the drawings. And embodiments are merely used to more clearly explain the technical solution of the present disclosure, and therefore are merely examples, and should not limit the scope of protection of the present disclosure.

Unless otherwise defined, all technical and scientific terms used herein have the same meaning as commonly understood by those skilled in the art of the present disclosure. The terms used herein are for the purpose of describing embodiments only and not intended to limit the present disclosure; The terms "including" and "having" and any variations thereof in the specification and claims of the present disclosure and the above description of drawings are intended to cover non-exclusive inclusions.

In the embodiments of the present disclosure, the technical terms "first", "second" and the like are only used to distinguish different objects, and should not be understood to indicate or imply relative importance or implicitly indicate the number, specific order, or primary-secondary relationship of the indicated technical features. In the embodiments of the present disclosure, "a plurality" means two or more unless otherwise explicitly and specifically defined.

An "embodiment" means that a particular feature, structure, or characteristic described may be included in at least one embodiment of the present disclosure. The appearance of the word "embodiment" in various places in the specification does not necessarily refer to the same embodiment, nor refer to an independent or alternative embodiment that is mutually exclusive from other embodiments. It may be explicitly and implicitly understood by those skilled in the art that the embodiments described herein may be combined with other embodiments.

In the embodiments of the present disclosure, the technical terms such as "center", " longitude", " latitude", "length", "width", "thickness", "upper", "lower", "front", "rear", "left", "right", "vertical", "horizontal", "top", "bottom", "inner", "outer", "clockwise", "counterclockwise", "axial", "radial", "circumferential" and the like are based on the orientation or positional relationships shown in the drawings, and are merely used to facilitate and simplify the description of the embodiments of the present disclosure, and do not indicate or imply that the referred device or element must have a specific orientation, be constructed and operated in a specific orientation, and therefore cannot be understood as a limitation of the embodiments of the present disclosure.

In the embodiments of the present disclosure, unless otherwise explicitly specified and defined, technical terms such as "mounted", "linked", "connected" and "fixed" should be understood in a broad sense, for example, they may be fixed connected, detachable connected, or integrated; It may also be a mechanical connection, and those skilled in the art can understand the specific meanings of the above terms in the embodiments of the present disclosure according to specific circumstances.

It can be understood that flowcharts are used in the present disclosure to illustrate operations performed by the system according to embodiments of the present disclosure. It should be understood that, depending on the actual situation, the preceding or following operations are not necessarily performed precisely in order. One can also add additional steps to these procedures, or remove a step or steps from them.

Although the air vent disclosed in the embodiments of the present disclosure is applicable to automobiles, it is not limited thereto. For example, it can be applied to other vehicle application scenarios, such as railway trains, ships, airplanes, etc., as long as the vehicle cabin is equipped with a temperature and humidity adjustment device, the air vent disclosed in the embodiments can be applied.

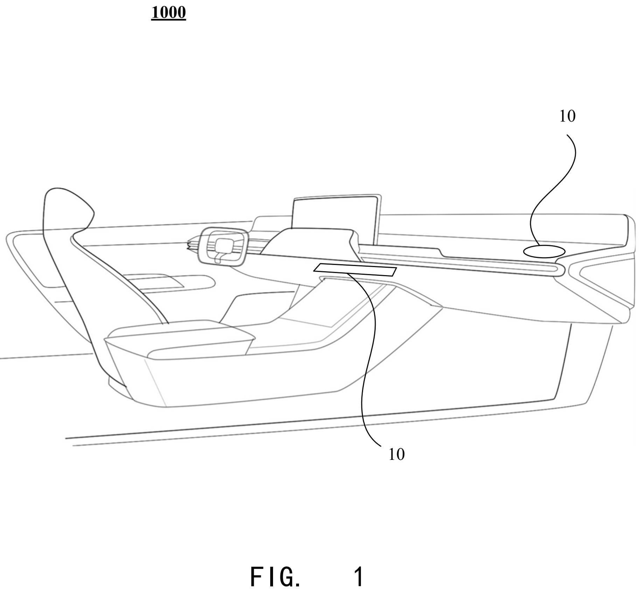

Referring to FIG. 1, an automobile is taken as an example of a vehicle 1000. In the cabin of the automobile, the air vent 10 described in detail in the following embodiments adjusts the air outlet direction of the automobile air conditioner, thereby adjusting parameters such as temperature and humidity in the cabin to improve the user experience of the user.

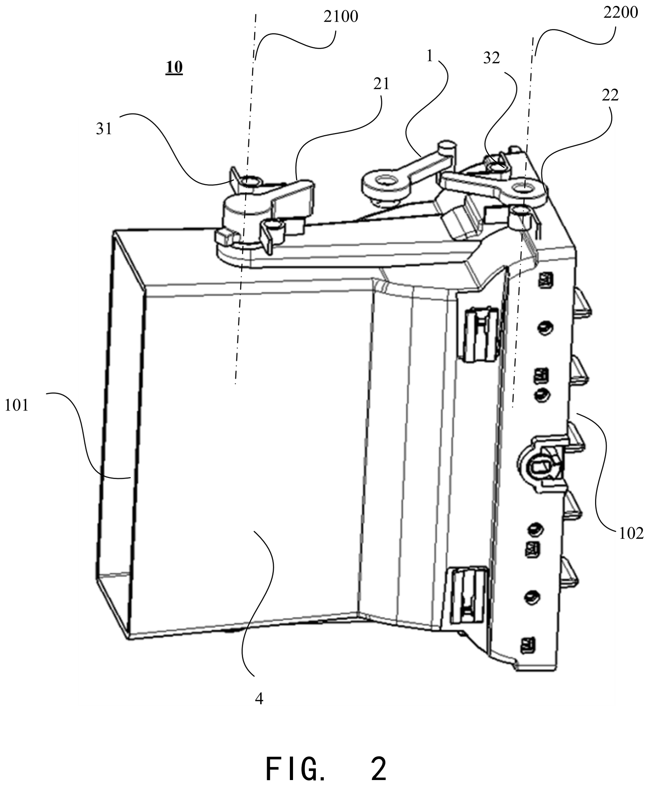

Referring to FIG. 2, FIGS. 3A to 3E and FIGS. 4A to 4F, the air vent 10 includes a crank 1, a first transmission rod 21, a second transmission rod 22, a first elastic member group 31 and a second elastic member group 32.

The crank 1 has a similar meaning as commonly understood in the art, that is, a link rod that forms a full-cycle revolute pair with the frame is called a crank.

The first transmission rod 21 is able to be driven by the rotation output by the crank 1 and drives the first blowing direction air guiding member of the air vent. The second transmission rod 22 is able to be driven by the rotation output by the crank 1 and drives the second blowing direction air guiding member of the air vent. The blowing directions of the first blowing direction air guiding member and the second blowing direction air guiding member are arranged non - parallelly. In some embodiments, the first blowing direction air guiding member is a horizontal blade in the prior art, that is, the first blowing direction is horizontal, also known as the left - right direction; the second blowing direction air guiding member is a vertical blade in the prior art, that is, the second blowing direction is vertical, also known as the up - down direction. In some embodiments, the blowing directions of the first blowing direction air guiding member and the second blowing direction air guiding member are perpendicular to each other, which facilitates the calculation related to angle adjustment, but it is not limited thereto. It can be understood that the blowing directions of the first blowing direction air guiding member and the second blowing direction air guiding member can also be non-perpendicular. In addition, since the first blowing direction air guiding member and the second blowing direction air guiding member can employ the structure and form in the prior art, they are not shown in the accompanying drawings.

In some embodiments, the first transmission rod 21 and the second transmission rod 22 rotatably drive the first blowing direction air guiding member and the second blowing direction air guiding member respectively. The rotational driving method has a compact and simple structure and is easy to control. With continued reference to FIG. 2, the first transmission rod 21 rotates around a first axis 2100, the second transmission rod 22 rotates around a second axis 2200, and the first axis 2100 and the second axis 2200 are parallel to each other, making full use of the arrangement space inside the air vent and further compact the structure of the air vent.

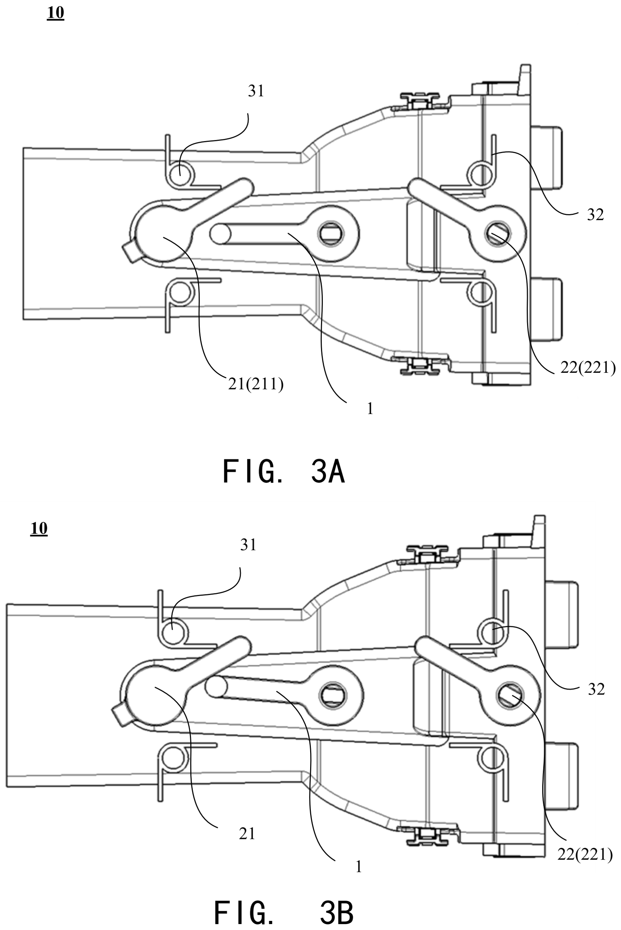

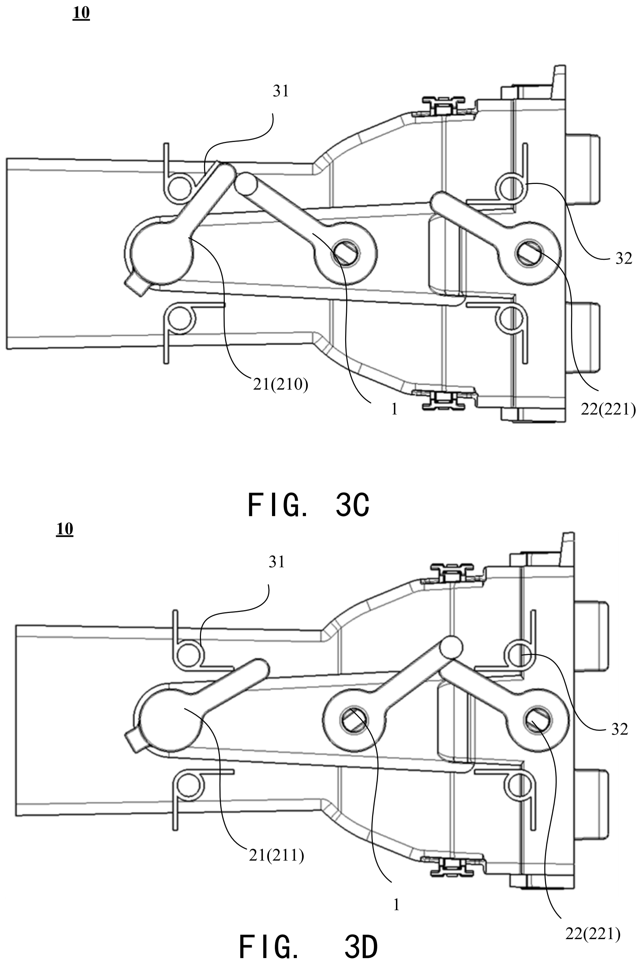

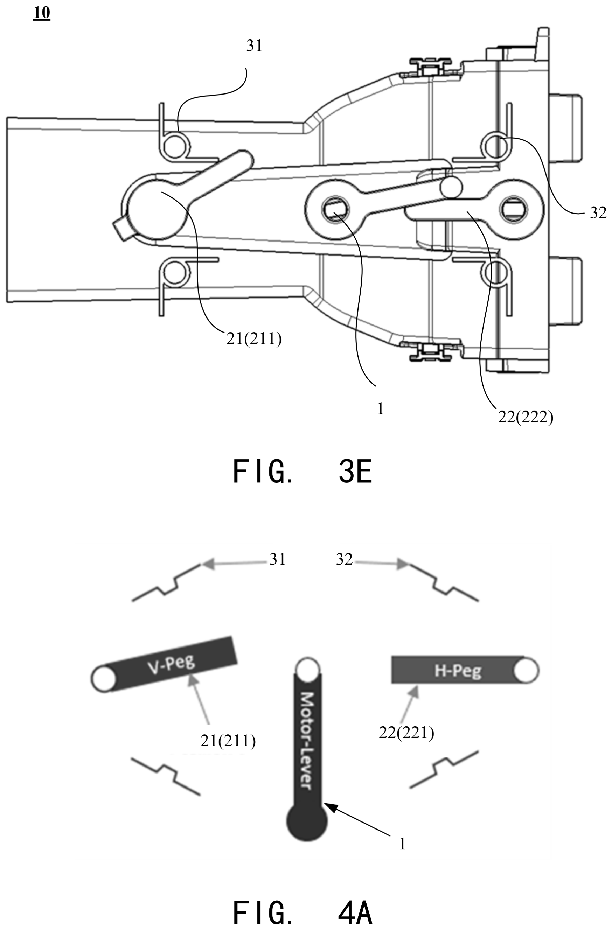

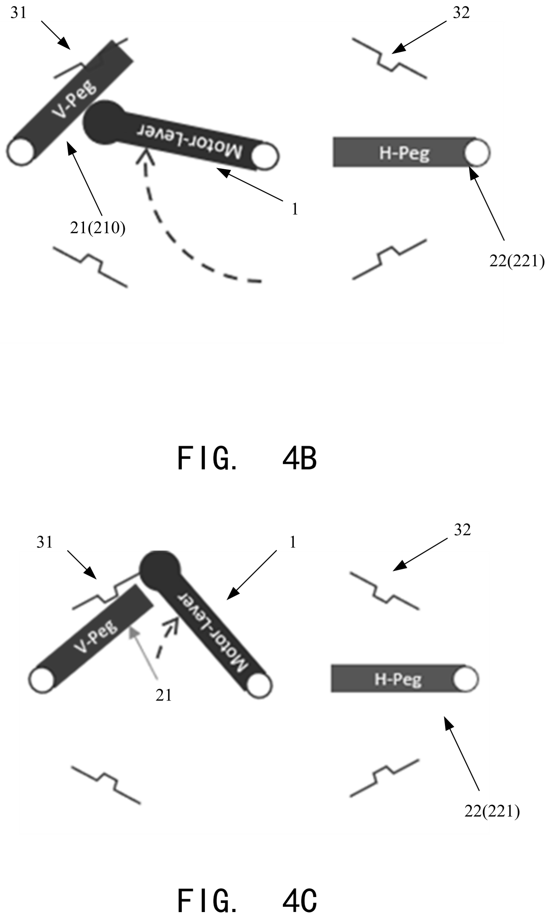

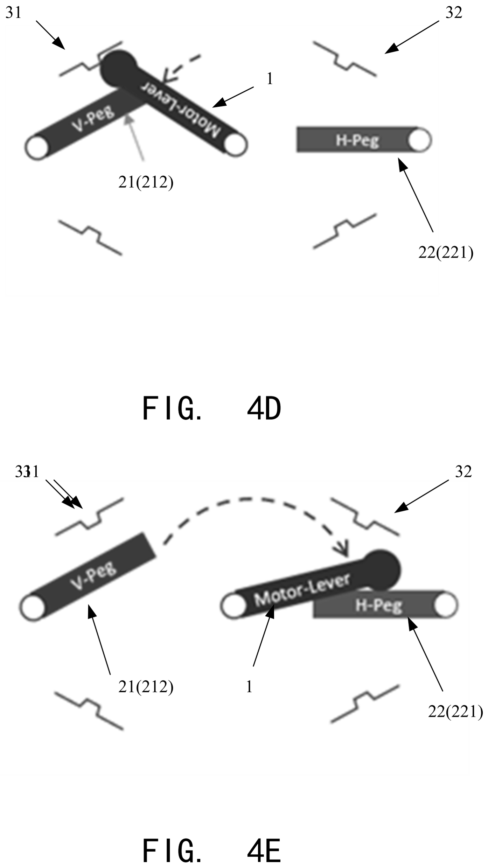

The first elastic member group 31 is able to contact the first transmission rod 21, and the first elastic member group 31 defines two ends of the rotation range of the first transmission rod 21. The second elastic member group 32 is able to contact the second transmission rod 22, and the second elastic member group 32 defines two ends of the rotation range of the second transmission rod 22. The two ends of the rotation range are, for example, as shown in FIGS. 3A to 3E and FIGS. 4A to 4F, the elastic member groups limit the angle range of the rotation. In some embodiments, the first elastic member group 31 and the second elastic member group 32 are torsion springs, but it is not limited thereto. For example, they can also be in the form of linear springs, coil springs, etc. The torsion spring has a simple structure and is easy to realize the structure that defines the two ends of the rotation range.

In a full-cycle rotation trajectory output by the crank 1, the full-cycle rotation trajectory of the crank 1 interferes with the first transmission rod 21 and the second transmission rod 22; and the crank 1 drives at most one of the first transmission rod 21 and the second transmission rod 22 to rotate.

For example, as shown in FIGS. 3A to 3E and FIGS. 4A to 4F, the meaning that the full-cycle rotation trajectory of the crank 1 interferes with the first transmission rod 21 and the second transmission rod 22 in the full-cycle rotation trajectory output by the crank 1 is that the contour of the full-cycle rotation trajectory of the crank 1 (shown by the dotted circle in the figure) intersects with the first transmission rod 21 and the second transmission rod 22, and the crank 1 does not contact both the first transmission rod 21 and the second transmission rod 22 at the same time, but contacts at most one of them. That is, in some embodiments, the crank 1 drives one of the first transmission rod 21 and the second transmission rod 22, and is non - contacting with the other one. Therefore, the crank 1 drives at most one of the first transmission rod 21 and the second transmission rod 22 to rotate. In this way, the function that the crank 1 drives at most one of the first transmission rod 21 and the second transmission rod 22 to rotate is able to be realized with a relatively simple structure.

Referring to FIGS. 3A to 3E, the transmission mechanism between the crank 1 and the first transmission rod 21 and the second transmission rod 22 is as shown in the figures, that is, the crank 1 drives one of the first transmission rod 21 and the second transmission rod 22 to rotate by directly abutting against it. Thus, there is no need to arrange other transmission parts and transmission mechanisms between the transmission rods and the crank, making the structure of the air vent 10 further simple and compact.

The beneficial effects are as follows: Through the structure of the first transmission rod, the second transmission rod, the first elastic member group and the second elastic member group, as well as the arrangement of the rotation path, the full-cycle rotation trajectory of the crank interferes with the first transmission rod and the second transmission rod; and the crank drives at most one of the first transmission rod and the second transmission rod to rotate. This not only realizes that a single motor is able to control the angles of the first blowing direction and the second blowing direction, but also the first blowing direction air guiding member and the second blowing direction air guiding member are independently controlled without linkage control between them, making the structure of the air vent simple and easy to control.

Referring to FIGS. 3A to 3E, FIGS. 4A to 4F and FIGS. 5A and 5B, steps of the method for adjusting the blowing angle by employing the air vent 10 with the above structure can be steps described below.

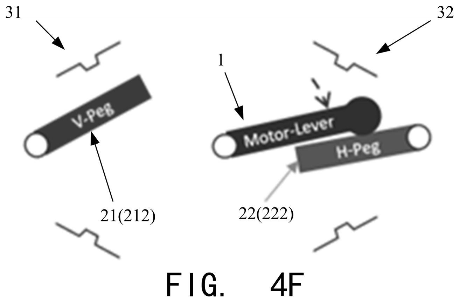

The air vent 10 is able to be switched between a first state shown in FIG. 4A and a second state shown in FIG. 4F. In the first state shown in FIG. 4A, the first blowing direction air guiding member of the air vent 10 provides a first blowing angle (at this time, the first transmission rod 21 is at a first position 211), and the second blowing direction air guiding member is at a second blowing angle (at this time, the second transmission rod 22 is at a second position 221); in the second state shown in FIG. 4F, the first blowing direction air guiding member of the air vent 10 is at a third blowing angle (at this time, the first transmission rod 21 is at a third position 212), and the second blowing direction air guiding member is at a fourth blowing angle (at this time, the second transmission rod 22 is at a fourth position 222). The first blowing angle is different from the third blowing angle, and the second blowing angle is different from the fourth blowing angle.

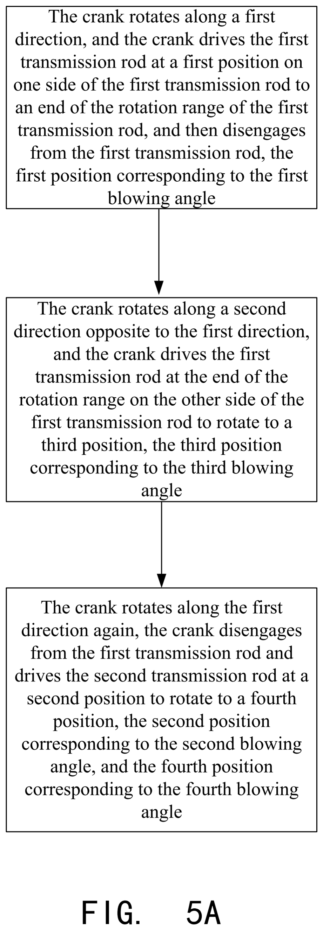

Referring to FIG. 5A, the air blowing method includes the following steps to realize switching from the first state to the second state:
As shown in FIGS. 4A to 4C, the crank 1 rotates along a first direction, and the crank 1 drives the first transmission rod 21 at the first position 211 on one side of the first transmission rod 21 to an end 210 of the rotation of the first transmission rod 21, and then disengages from the first transmission rod 21, the first position 211 corresponding to the first blowing angle;
Then, as shown in FIGS. 4C to 4D, the crank 1 rotates along a second direction opposite to the first direction, and the crank 1 drives the first transmission rod 21 at the end 210 of the rotation range on the other side of the first transmission rod 21 to rotate to the third position 212, the third position 212 corresponding to the third blowing angle;
Then, as shown in FIGS. 4D to 4F, the crank 1 rotates along the first direction again, the crank 1 disengages from the first transmission rod 21 and drives the second transmission rod 22 at the second position 221 to rotate to the fourth position 222, the second position 221 corresponding to the second blowing angle, and the fourth position 222 corresponding to the fourth blowing angle.

Here, the first direction is a clockwise direction, and the second direction is a counterclockwise direction.

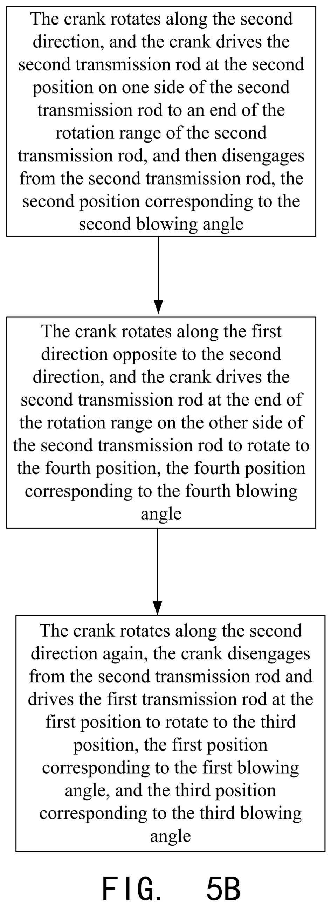

It can be understood that in the embodiment shown in FIGS. 4A to 4F, the crank rotates along the first direction first for adjustment, but it is not limited thereto. For example, it can also rotate along the second direction first for adjustment, such as the following steps shown in FIG. 5B:
The crank 1 rotates along the second direction, and the crank 1 drives the second transmission rod 22 at the second position 221 on one side of the second transmission rod 22 to an end of the rotation range of the second transmission rod 22, and then disengages from the second transmission rod 22, the second position 221 corresponding to the second blowing angle;
The crank 1 rotates along the first direction opposite to the second direction, and the crank 1 drives the second transmission rod 22 at the end of the rotation range on the other side of the second transmission rod 22 to rotate to the fourth position 222, the fourth position 222 corresponding to the fourth blowing angle;
The crank 1 rotates along the second direction again, the crank 1 disengages from the second transmission rod 22 and drives the first transmission rod 21 at the first position 211 to rotate to the third position 212, the first position 211 corresponding to the first blowing angle, and the third position 212 corresponding to the third blowing angle.

With continued reference to FIGS. 3A to 3E, in some embodiments, it is also possible to adjust only the position of one of the first transmission rod 21 and the second transmission rod 22.

That is, in the first state, the first blowing direction air guiding member of the air vent 10 provides the first blowing angle, and the second blowing direction air guiding member is at the second blowing angle; in the second state, the first blowing direction air guiding member of the air vent 10 is at the first blowing angle, and the second blowing direction air guiding member is at the fourth blowing angle; or in the second state, the first blowing direction air guiding member of the air vent 10 is at the third blowing angle, and the second blowing direction air guiding member is at the second blowing angle. The first blowing angle is different from the third blowing angle, and the second blowing angle is different from the fourth blowing angle.

Then, referring to FIGS. 3A to 3E, the air blowing method includes the following steps to realize switching from the first state to the second state:
As shown in FIGS. 3A to 3C, the crank 1 rotates along the first direction, and the crank 1 drives the first transmission rod 21 at the first position 211 on one side of the first transmission rod 21 to the end 210 of the rotation range of the first transmission rod 21, and then disengages from the first transmission rod 21, the first position 211 corresponding to the first blowing angle;
As shown in FIG. 3D, after disengaging from the first transmission rod 21 at the end 210 of the rotation range of the first transmission rod 21, the first transmission rod 21 returns to the first position 211 under the elastic force of the first elastic member group 31;
As shown in FIGS. 3D to 3E, the crank 1 continues to rotate along the first direction, the crank 1 disengages from the first transmission rod 21 and drives the second transmission rod 22 at the second position 221 to rotate to the fourth position 222, the second position 221 corresponding to the second blowing angle, and the fourth position 222 corresponding to the fourth blowing angle.

It can be understood that the adjustment can also be realized by rotating along the second direction, that is, including the following steps:
The crank 1 rotates along the second direction, and the crank 1 drives the second transmission rod 22 at the second position 221 on one side of the second transmission rod 22 to the end of the rotation range of the second transmission rod 22, and then disengages from the second transmission rod 22, the second position 221 corresponding to the second blowing angle;
Then, the crank 1 rotates along the first direction opposite to the second direction, and the crank 1 drives the second transmission rod 22 at the end of the rotation range on the other side of the second transmission rod 22 to rotate to the fourth position 222, the fourth position 222 corresponding to the fourth blowing angle. Since the crank 1 does not contact the first transmission rod 21, the first transmission rod 21 remains at the first position 211.

With continued reference to FIG. 2, in some embodiments, the structure of the air vent 10 can be as follows: the air vent 10 includes a shell 4, the shell 4 defines a flow space 101 and an outlet 102 of the air vent 10, the crank 1, the first transmission rod 21 and the second transmission rod 22 are located outside the shell 4; the first blowing direction air guiding member and the second blowing direction air guiding member are located inside the flow space 101. The air vent 10 with such a structure has a more compact structure.

In summary, the beneficial effects of the air vent, the vehicle and the air blowing method employing the above embodiments include but are not limited to: Through the structure of the first transmission rod, the second transmission rod, the first elastic member group and the second elastic member group, as well as the arrangement of the rotation path, the full-cycle rotation trajectory of the crank interferes with the first transmission rod and the second transmission rod; and the crank drives at most one of the first transmission rod and the second transmission rod to rotate. This not only realizes that a single motor is able to control the angles of the first blowing direction and the second blowing direction, but also the first blowing direction air guiding member and the second blowing direction air guiding member are independently controlled without linkage control between them, making the structure of the air vent simple and easy to control.

Although the present disclosure is disclosed as above with embodiments, it is not intended to limit the present disclosure. Any person skilled in the art can make possible changes and modifications without departing from the spirit and scope of the present disclosure. Therefore, any modification, equivalent change, and modification made to the above embodiments according to the technical essence of the present disclosure without departing from the content of the technical solution of the present disclosure shall fall within the scope defined by the claims of the present disclosure.

## Claims

1. An air vent (10), **characterized in that** it comprises:
a crank (1) being capable of outputting rotation;
a first transmission rod (21) being capable of being driven by the rotation output by the crank (1) and driving a first blowing direction air guiding member;
a second transmission rod (22) being capable of being driven by the rotation output by the crank (1) and driving a second blowing direction air guiding member; wherein the first blowing direction and the second blowing direction are arranged non-parallelly;
a first elastic member group (31) being capable of contacting the first transmission rod (21), wherein the first elastic member group (31) providing two ends of a rotation range of the first transmission rod (21);
a second elastic member group (32) being capable of contacting the second transmission rod (22), and the second elastic member group (32) providing two ends of a rotation range of the second transmission rod (22);
wherein, in a full-cycle rotation trajectory output by the crank (1), the full-cycle rotation trajectory of the crank (1) interferes with the first transmission rod (21) and the second transmission rod (22); and the crank (1) drives at most one of the first transmission rod (21) and the second transmission rod (22) to rotate.

2. The air vent (10) according to claim 1, **characterized in that** it comprises a shell (4), the shell (4) providing a flow space (101) and an outlet (102) of the air vent (10), and the crank (1), the first transmission rod (21), and the second transmission rod (22) are located outside the shell (4); and the first blowing direction air guiding member and the second blowing direction air guiding member are located inside the flow space (101).

3. The air vent (10) according to claim 1, **characterized in that** the first elastic member group (31) and the second elastic member group (32) are torsion springs.

4. The air vent (10) according to claim 1, **characterized in that** the crank (1) drives one of the first transmission rod (21) and the second transmission rod (22), and the crank (1) is non-contacting with the other of the first transmission rod (21) and the second transmission rod (22).

5. The air vent (10) according to claim 1, **characterized in that** the first transmission rod (21) and the second transmission rod (22) respectively drive the first blowing direction air guiding member and the second blowing direction air guiding member in a rotational way.

6. The air vent (10) according to claim 5, **characterized in that** the first transmission rod (21) rotates around a first axis (2100) and the second transmission rod (22) rotates around a second axis (2200), and the first axis (2100) and the second axis (2200) are parallel.

7. The air vent (10) according to claim 1, **characterized in that** the first blowing direction and the second blowing direction are perpendicular to each other.

8. The air vent (10) according to claim 1, **characterized in that** the crank (1) drives one of the first transmission rod (21) and the second transmission rod (22) to rotate by directly abutting against the first transmission rod (21) or the second transmission rod (22).

9. A vehicle (1000), **characterized in that** it comprises at least one air vent (10) according to any one of claims 1 to 8.

10. An air blowing method, **characterized in that** the air vent (10) according to any one of claims 1 to 8 is used, and the air vent (10) is set to be switched between a first state and a second state; and in the first state, the first blowing direction air guiding member is at a first blowing angle, and the second blowing direction air guiding member is at the second blowing angle; in the second state, the first blowing direction air guiding member is at a third blowing angle, and the second blowing direction air guiding member is at a fourth blowing angle, the first blowing angle is different from the third blowing angle, and the second blowing angle is different from the fourth blowing angle;
the air blowing method comprises following steps to achieve switching from the first state to the second state:
the crank (1) rotating along a first direction, and the crank (1) driving the first transmission rod (21) at a first position (211) on one side of the first transmission rod (21) to an end (210) of a rotation range of the first transmission rod (21) and then disengaging from the first transmission rod (21), and the first position (211) corresponding to the first blowing angle;
the crank (1) rotating along a second direction, and the second direction is opposite to the first direction, and the crank (1) driving the first transmission rod (21) at the end (210) of the rotation range on the other side of the first transmission rod (21) to rotate to a third position (212), and the third position (212) corresponding to the third blowing angle;
the crank (1) rotating along the first direction, the crank (1) disengaging from the first transmission rod (21) and driving the second transmission rod (22) at the second position (221) to rotate to a fourth position (222), the second position (211) corresponding to the second blowing angle, the fourth position (222) corresponding to the fourth blowing angle;
or
the crank (1) rotating in a second direction, the crank (1) driving the second transmission rod (22) at a second position (221) to an end of rotation range of the second transmission rod (22) on one side of the second transmission rod (22), and then disengaging from the second transmission rod (22), the second position (221) corresponding to the second blowing angle degrees;
the crank (1) rotating in a first direction, the second direction being opposite to the first direction, and the crank (1) driving the second transmission rod (22) at the end of the rotation range on the other side of the second transmission rod (22) to rotate to a fourth position (222), and the fourth position (222) corresponding to the fourth blowing angle;
the crank (1) rotating in the second direction, the crank (1) disengaging from the second transmission rod (22) and driving the first transmission rod (21) at the first position (211) to rotate to a third position (212), the first position (211) corresponding to the first blowing angle, and the third position (212) corresponding to the third blowing angle.
